# EUROPÄISCHE PATENTSCHRIFT

(11) **EP 2 457 959 B1**
(45) Veröffentlichungstag und Bekanntmachung des Hinweises auf die Patenterteilung: **08.01.2014**
(21) Anmeldenummer: 10192567.5
(22) Anmeldetag: 25.11.2010
(51) Int. Cl.: C09D 5/02, C09D 7/06

(54) **Verwendung von Estern als Koaleszenzmittel**
Use of esters as coalescing agents
Utilisation d'esters comme agents de coalescence

(43) Veröffentlichungstag der Anmeldung: 30.05.2012
(73) Patentinhaber: Cognis IP Management GmbH, 40589 Düsseldorf (DE)
(72) Erfinder: Scherer, Markus, DE - 50733 Köln (DE); Bergmann, Edda, 40599 Düsseldorf (DE); Frommelius, Harald, 40789 Monheim (DE); Oestreich, Sascha, 40589 Düsseldorf (DE); Becherer, Miriam, 45479 Mülheim (DE)

(56) Entgegenhaltungen:
- EP-A2- 0 501 614
- WO-A1-2008/135170

## Beschreibung

### Gebiet der Erfindung

Die Erfindung betrifft die Verwendung von Estern, deren Säurebaustein eine Monocarbonsäure mit 8 bis 12 C-Atomen ist und deren Alkoholbaustein ausgewählt wird aus der Gruppe der Pentanole, als Koaleszenzmittel, insbesondere für die Herstellung von Beschichtungsstoffen.

### Stand der Technik

Koaleszenzmittel (auch Filmbildehilfsmittel genannt) sind an sich bekannt. Sie werden wässrigen Beschichtungsstoffen zugesetzt und bewirken ein Verfilmen der dispergierten Polymerteilchen zu einem homogenen Lackfilm. Ihr Zusatz ist dann erforderlich, wenn die Filmbildetemperatur des Bindemittels oberhalb der Anwendungstemperatur liegt.

Bekannte Filmbildehilfsmittel sind: Ethylenglykolethylether, Ethylenglykolpropylether, Ethylenglykolbutylether, Ethylenglykolhexylether, Diethylenglykolmethylether, Diethylenglykolethylether, Diethylenglykolbutylether, Diethylenglykolhexylether, Propylenglykol-n-butylether, Dipropylenglykol-n-butylether, Dipropylenglykolmethylether, Tripropylenglykolmethylether, Propylenglykolphenylether, Propylenglykol-t-butylether, 2,2,4-Trimethyl-1,3-pentandiol-mono-isobutyrat, 2,2,4-Trimethyl-1,3-pentandioldiisobutyrat.

In letzter Zeit sind wasserbasierte Beschichtungen aus ökologischen Gründen sehr aktuell geworden. Traditionell wurden bei Latex-Beschichtungen, die insbesondere auf kleinen Teilchen synthetischer Kunststoffe wie Polyacrylaten basieren, Koaleszenzmittel in substanziellen Mengen eingesetzt. Diese Koaleszenzmittel (auch Verfilmungshilfsmittel genannt) werden den Beschichtungen zugesetzt, um die Filmbildung zu verbessern. Die Funktion beruht darauf, dass das Koaleszenzmittel weichmachend auf die Latexteilchen einwirkt, so dass diese zusammenfließen und einen kontinuierlichen Film ausbilden können. Dieser Film hat nach der Verdunstung des Wassers optimale Filmeigenschaften. Bei der Ausbildung eines Films ist die sogenannte Filmbildetemperatur von Bedeutung, bei der (bzw. unterhalb der) die Polymerteilchen zu einem Film zusammenfließen. Die üblichen Koaleszenzmittel senken die Filmbildetemperatur des Polymers.

Konventionelle Koaleszenzmittel sind bestimmte Ester und Ether; bekannte technische Standards sind der Hydroxyester "Texanol" von Eastman (auch oft TMB genannt; ein 2,2,4-Trimethyl-1,3-pentandiol-mono-isobutyrat) sowie "EGBE" von Union Carbide (Ethylenglykolmonobutylether).

Bereits 1976 wurde DE 24,43,645 publiziert. Hier wird explizit Benzoesäure-1,2-propandiol-monoester offenbart, allerdings speziell im Zusammenhang mit Aminoplasten. Die Ansprüche richten sich auf "modifizierte Aminoplaste", die Verbindungen des Typs Aryl-COO-X-OH als Modifizierungsmittel enthalten.

US 3,399,158 offenbart Diester von C₂₋₆-Dicarbonsäuren.

Im Jahre 1984 wurde das Patent US 4,489,188 erteilt. Als Koaleszenzmittel für Beschichtungen werden hier EO- und PO-Addukte an aromatische Carbonsäuren wie Benzoesäure offenbart.

US 4,894,406 von 1988 offenbart 2-Alkyl-1,3-Hexandiol-Alkylester, also spezielle Hydroxyester, als Koaleszenzmittel.

US 5,756,569 von 1996 offenbart 3-Alkoxy-Propionate als Koaleszenzmittel.

EP 069,839 B1 claimt die Verwendung von Hydroxyestergemischen als Verlaufshilfsmittel für wässrige Kunststoffdispersionen. Es sind solche Verbindungen, die durch Umsetzung von Propylenoxid mit aliphatischen C₇₋₁₂-Monocarbonsäuren zugänglich sind.

Sogenannte reaktive Koaleszenzmittel wurden bereits früh erwähnt, so zum Beispiel in US 4,141,864**.** Hier wurden Dicyclopentenyloxyethylmethacrylat eingesetzt, dem allerdings geruchliche Nachteile zugeschrieben werden.

Gemäß EP 599,478 A1 können Acetoacetate als reaktives Koaleszenzmittel eingesetzt werden.

EP 501,614 A2 von 1991 nennt Ester von Ketocarbonsäuren als Koaleszenzmittel.

Die Claims des europäischen Patentes EP 1,169,397 B1 richten sich auf filmbildende Zusammensetzungen, bei der Polymere oder Prepolymere in einer wäßrigen Phase emulgiert sind und wobei die Zusammensetzung ein Koaleszenzmittel enthält, der ein Ester ist und durch die Formel R-COOX charakterisiert ist. Dabei sind R und X Hydrocarbylgruppen oder substituierte Hydrocarbylgruppen. Wenigstens einer der beiden Reste muß wenigstens zwei C=C-Doppelbindungen enthalten.

US 2005/0182168 A1 offenbart eine Kombination von Glykolestern von Pflanzenölbasierten Fettsäuren und Antioxidantien. Propylenglykol-Monoester werden dabei speziell thematisiert.

WO 00/56823 offenbart filmbildende Zusammensetzungen mit einer wässrigen und einer dispergierten Phase, wobei letztere ein Polymer und ein Koaleszenzmittel enthält. Letzteres ist ein Ester, für den die strukturelle Maßgabe gilt, der Säurebaustein und/oder der Alkoholbaustein mindestens zwei C=C-Doppelbindungen enthalten müssen. Der technische Sinn dieser Vielzahl an Doppelbindungen besteht darin, dass das Koaleszenzmittel selbst reaktiv vernetzt werden soll, man spricht hier von einem reaktiven Koaleszenzmittel.

Claim 1 von US 6,762,230 B2 richtet sich auf Beschichtungszusammensetzungen enthaltend ein Latex-Polymer und ein Koaleszenzmittel der Formel R¹(CO-Xᵣ-O)ₙ-R². Dabei ist R¹ eine organische Gruppe, X eine zweiwertige organische Gruppe, der Index r kann 0 oder 1 sein, der Index n kann im Bereich von 1 bis 10 liegen und R² ist Wasserstoff oder eine organische Gruppe. Sofern r den Wert 0 und n den Wert 1 annimmt und die Reste R¹ und R² Alkylreste sind, umschreibt die genannte Formel Fettsäureester. Es ist jedoch darauf hinzuweisen, dass Fettsäureester in der US 6,762,230 B2 nicht konkret offenbart sind. Vielmehr sind die konkret in Rede stehenden Koaleszenzmittel der US 6,762,230 B2 keine Fettsäureester.

Fettsäurealkylester sind in den beiden folgenden Schriften erwähnt: In EP 26982 A1 aus dem Jahre 1980 werden wässrige Beschichtungs-Zusammensetzungen mit einem Polymer und einem Koaleszenzmittel geclaimt. Letzteres ist auszuwählen aus dreierlei "Sorten" von Estern, eine Sorte ist dabei durch die Formel R¹-COOR² charakterisiert. Dabei ist R¹ eine Alkyl- oder Arylgruppe und R² eine Alkylgruppe (außer Methyl). In dem die Seiten 11 und 12 überbrückenden Absatz wird explizit ausgeführt, dass in der o.g. Ester-Formel vorzugsweise gilt: R¹ = C₃₋₇ und R² = C₄₋₈ (beide Reste aliphatisch). Auf Seite 13, Zeilen 10-33 sind namentlich geeignete Ester aufgelistet. Auf Seite 13, Zeile 35ff wird ausdrücklich ausgeführt, dass Methyl- und Ester im allgemeinen zu vermeiden sind, weil sie in Farbsystemen instabil sind (Hydrolyseneigung). Mithin wird hier einerseits dem Fachmann explizit davon abgeraten, Ester als Koaleszenzmittel einzusetzen, deren Alkoholbaustein Methanol oder Ethanol ist und implizit davon abgeraten, Ester als Koaleszenzmittel einzusetzen, deren Alkoholbaustein 3 oder 4 C-Atome aufweist (denn in der bevorzugten Ausführungsform ist umfasst wie oben erwähnt R² einen Bereich von 4-8 C-Atomen). Insbesondere sind keine Fettsäureester konkret offenbart, deren Alkoholbaustein 1 bis 3 C-Atome aufweist.

DE 2449471 A1 von 1974 claimt Ester geradkettiger C₂₋₆-Fettsäuren, wobei es sich bei dem Alkoholbaustein der Ester um aliphatische C₃₋₄-Alkohole handelt, als Lösungsmittel für Lacke. Von Koaleszenzmitteln ist hier nicht die Rede.

WO 2008/135170 A1 beschreibt die Verwendung von Estern der allgemeinen Formel R¹-COOR², worin R¹ ein Alkylrest mit 9 bis 23 C-Atomen und R² ein gesättigter Alkylrest ausgewählt aus der Gruppe Methyl, Ethyl, n-Propyl und i-Propyl ist, als Koaleszenzmittel.

### Beschreibung der Erfindung

Es besteht ständiger Bedarf an neuen Koaleszenzmitteln. Es war daher die Aufgabe der vorliegenden Erfindung Koaleszenzmittel zur Verfügung zu stellen. Diese sollten sich insbesondere für die Herstellung von Beschichtungen wie Lacken, Farben und dergleichen eignen. Die Koaleszenzmittel sollten insbesondere derart sein, dass sie aus erneuerbaren (nachwachsenden) Rohstoffen zugänglich sind. Ferner sollten die Koaleszenzmittel entweder wohlriechend sein oder eine möglichst geringe Geruchsentwicklung zeigen, was insbesondere für den Einsatz als Koaleszenzmittel in Innenraumanstrichsfarben wünschenswert ist.

Der Begriff der Koaleszenzmittel (in der Literatur auch Verfilmungshilfsmittel oder Filmbildehilfsmittel genannt) ist dabei in dem oben dargestellten und dem Fachmann wohlvertrauten Sinne zu verstehen.

Es sei ausdrücklich festgestellt, dass sich die erfindungsgemäß zu entwickelnden Koaleszenzmittel insbesondere für den Einsatz in wässrigen Dispersionen von Kunststoffen bzw. Latexteilchen, die für Beschichtungszwecke jeglicher Art geeignet sind (zum Beispiel für wasserbasierte Lacke und Farben), bestimmt sind.

Derartige Dispersionen, die typischerweise durch Emulsionspolymerisation hergestellt werden und die neben Wasser, den in der Emulsionspolymerisation eingesetzten Hilfsstoffen und den Kunststoff- bzw. Latexteilchen weitere Bestandteile enthalten können, die für den jeweils gewünschten Beschichtungszweck üblicherweise eingesetzt werden, werden üblicherweise auf die zu beschichtende Oberfläche appliziert, danach erfolgt ein Verdunsten des Wassers und schließlich ist es wesentlich, dass die Polymer- bzw. Latexteilchen ineinander fließen und einen homogenen Film bilden. Dieser Prozess der Filmbildung setzt voraus, dass eine Mindesttemperatur eingehalten wird, die vom Fachmann Mindestfilmbildetemperatur (MFT) genannt wird. Beträgt die MFT eines Systems beispielsweise 20 °C, so bedeutet dies, dass eine Filmbildung nur dann erfolgreich verläuft, wenn die Temperatur 20 °C oder höher ist. Will man hingegen eine Filmbildung bei niedrigeren Temperaturen bewirken, zum Beispiel bei 10 °C oder noch niedrigeren Temperaturen, so muß man den genannten wässrigen Dispersionen ein Koaleszenzmittel in einer Menge zusetzen, dass die MFT auf den gewünschten Wert gesenkt wird.

In dieser Hinsicht hat sich die vorliegende Erfindung insbesondere zum Ziel gesetzt Koaleszenzmittel zu entwickeln, die die MFT von wässrigen Dispersionen von Kunststoff- bzw. Latexteilchen, die für beliebige Beschichtungszwecke bestimmt sind, möglichst effektiv zu senken.

Gegenstand der vorliegenden Erfindung ist die Verwendung von Estern (I), deren Säurebaustein eine Monocarbonsäure mit 8 bis 12 C-Atomen ist und deren Alkoholbaustein ausgewählt wird aus der Gruppe der Pentanole, als Koaleszenzmittel.

### Zu den Monocarbonsäuren

Wie oben ausgeführt haben die Monocarbonsäure-Bausteine der erfindungsgemäß einzusetzenden Ester (I) 8 bis 12 C-Atome pro Molekül. Dabei können die Monocarbonsäuren linear oder verzweigt, gesättigt oder ungesättigt sein. Lineare Fettsäuren sind dabei als Monocarbonsäuren bevorzugt. Beispiele geeigneter Fettsäuren sind etwa:
- Octansäure, Nonansäure, Decansäure (Caprinsäure), Undecansäure, Dodecansäure (Laurinsäure), Tridecansäure, Tetradecansäure (Myristinsäure), Diese Fettsäuren zählen zu den gesättigten Fettsäuren. Sie werden im Rahmen der vorliegenden Erfindung vorzugsweise als Säurebausteine der Ester (I) eingesetzt.
- 10-Undecensäure, Lauroleinsäure, Myristoleinsäure. Diese Fettsäuren zählen zu den ungesättigten Fettsäuren, die eine C=C-Doppelbindung enthalten.

### Zu den Pentanolen

Wie oben ausgeführt handelt es sich bei dem Alkoholbausteinen der Ester (I) um Pentanole. Pentanole sind Monoalkohole mit insgesamt fünf C-Atomen. Beispiele für Pentanole sind 1-Pentanol (Amylalkohol), 2-Pentanol, 3-Pentanol, 3-Methyl-butan-1-ol (Isoamylalkohol) und 2-Methyl-butan-l-ol. Die Pentanole können einzeln oder als Gemisch untereinander als Alkoholbausteine eingesetzt werden.

3-Methyl-butan-1-ol und 2-Methyl-butan-1-ol sind besonders bevorzugt.

In einer Ausführungsform werden Fuselalkohole mit einem Gehalt an Pentanolen, insbesondere 3-Methyl-butan-l-ol (Isoamylalkohol), eingesetzt. Fuselöle sind ein Gemisch aus mittleren und höheren Alkoholen (Fuselalkohole), Fettsäureestern, Terpenen und Furfuralen. Sie entstehen bei der alkoholischen Gärung als Nebenprodukte des Hefestoffwechsels und dienen in Bier, Wein und Spirituosen als Geschmacks- und A-romaträger. Beispiele für Fuselalkohole sind Propanole, Butanole, Pentanole (z.B. Isoamylalkohol) und Hexanole. 3-Methyl-1-butanol (Isoamylalkohol) ist Hauptbestandteil des Fuselöls.

Vorzugsweise eignen sich die Ester (I) als Koaleszenzmittel für die Herstellung von Beschichtungen wie Lacken, Farben und dergleichen, aber auch für Klebstoffe.

In einer Ausführungsform setzt man die Ester (I) als Koaleszenzmittel bei der Herstellung von Beschichtungen jeglicher Art auf Basis wässriger Polymer- bzw. Latex-Dispersionen ein.

Ein besonders bevorzugtes Gebiet für den Einsatz der Ester (I) als Koaleszenzmittel sind die sogenannten (wasserbasierten) Dispersionsfarben.

Die Ester (I) sind als Koaleszenzmittel sehr effizient, was daran ersichtlich ist, dass sie die minimale Filmbildungstemperatur (MFT) von wässrigen Polymerdispersionen ganz ausgezeichnet zu senken vermögen. Außerdem sind Beschichtungen (Filme), die unter Verwendung von wässrigen Polymerdispersionen mit einem Gehalt an den erfindungsgemäß einzusetzenden Ester (I) erhältlich sind, nach vierwöchiger Lagerung in der Regel deutlich härter und damit robuster und weniger schmutzanfällig als solche, die mit handelsüblichen Koaleszenzmitteln hergestellt wurden. Ein weiterer Vorteil der erfindungsgemäß einzusetzenden Ester (I) ist, dass ihr Siedepunkt oberhalb von 250°C liegt, was entsprechend der EU-Regelungen 1999/42/EG und 2004/42 unter "VOCfrei" einzustufen ist.

Die erfindungsgemäß einzusetzenden Ester (I) können in reiner Form oder in Form von Mischungen untereinander eingesetzt werden. Gewünschtenfalls kann man die Ester (I) auch in Kombination mit bekannten Koaleszenzmitteln einsetzen.

Ein weiterer Gegenstand der Erfindung ist dementsprechend die Verwendung von Zusammensetzungen enthaltend
(1) ein oder mehrere der oben definierten Ester (I) und
(2) ein oder mehrere weitere - von den Estern (I) verschiedene - Verbindungen ausgewählt aus der Gruppe der Ester, Ether und Hydroxyester
als Koaleszenzmittel, insbesondere bei der Herstellung von Beschichtungen jeglicher Art auf Basis wässriger Polymer- bzw. Latex-Dispersionen und vorzugsweise bei der Herstellung von Beschichtungen auf Basis von Dispersionsfarben.

Wie bereits ausgeführt kommen die erfindungsgemäß einzusetzenden Ester (I) insbesondere als Koaleszenzmittel für wäßrige Dispersionen von zu verfilmenden Polymer- bzw. Latexteilchen zum Einsatz. Dies gilt sowohl, wenn die Ester (I) allein (in Form einer reinen Species oder einer Mischung verschiedener Species) oder in Abmischung mit anderen - davon verschiedenen - Koaleszenzmitteln eingesetzt werden.

Die Ester (I) werden dabei vorzugsweise (je nach MFT des Polymers) in Mengen von 0,1 bis 40 Gew.-% und insbesondere 2 bis 6 Gew.-% - bezogen auf die Menge der Polymer- bzw. Latexteilchen, deren Mindestfilmbildetemperatur gesenkt werden soll - eingesetzt.

In einer anderen Betrachtungsweise kann man die Menge der Ester (I) auf eine fertige Beschichtungsrezeptur beziehen, die auf eine Oberfläche appliziert werden soll. In dieser Hinsicht werden die Ester (I) vorzugsweise (je nach MFT des Polymers) in Mengen von 0,1 bis 5 Gew.-% und insbesondere 0,5 bis 2% Gew.-% - bezogen auf die gesamte Beschichtungsrezeptur - eingesetzt.

Der Fachmann kann die Menge der Ester (I) je nach der Zusammensetzung einer konkreten Dispersion bzw. einer konkreten Beschichtungsrezeptur variieren und bei Bedarf auch höhere Mengen an Estern (I) einsetzen, insbesondere wenn das System Polymere mit hoher Mindestfilmbildetemperatur enthält und/oder eine Senkung auf möglichst niedrige MFT-Werte erfolgen soll.

Hinsichtlich der Natur der in den wässrigen Dispersionen vorhandenen Polymer- bzw. Latexteilchen gelten keine besonderen Beschränkungen. Es können somit alle dem Fachmann für Beschichtungszwecke einschlägig bekannten Polymeren und Copolymeren eingesetzt werden.

Die wässrigen Dispersionen können im Übrigen je nach gewünschtem Anwendungszweck bzw. der Art der Beschichtung weitere, dem Fachmann einschlägig bekannte Additive und Zusatzstoffe enthalten.

Die erfindungsgemäß einzusetzenden Ester (I) können den wässrigen Dispersionen unmittelbar nach der Herstellung, die vorzugsweise durch Emulsionspolymerisation erfolgt, aber auch zu einem späteren Zeitpunkt, etwa während der Herstellung eines Beschichtungsstoffes, zudosiert werden.

Die wässrigen Dispersionen mit einem Gehalt an erfindungsgemäß einzusetzendem Ester (I) können im Prinzip auf beliebige Oberflächen aufgebracht werden, beispielsweise auf Holz, Metall, Kunststoff, Glas, Papier, Beton, Mauerwerk und Putze.

### Beispiele

### Eingesetzte Substanzen

- Acronal 290D: Wäßrige Polymerdispersion auf Basis Butylacrylat/Styrol (Fa. BASF)
- VE-Wasser: vollentsalztes Wasser
- Isoamyloctanoat: erfindungsgemäßes Koaleszenzmittel = Ester mit dem Säurebaustein n-Octansäure und dem Alkoholbaustein 3-Methylbutan-1-ol und 2-Methyl-butan-1-ol (Verhältnis 4 : 1)
- Isoamyldecanoat: erfindungsgemäßes Koaleszenzmittel = Ester mit dem Säurebaustein n-Decansäure und dem Alkoholbaustein 3-Methylbutan-1-ol und 2-Methyl-butan-1-ol (Verhältnis 4 : 1)
- Lusolvan FBH: handelsübliches Koaleszenzmittel (Fa. BASF) zum Vergleich
- Loxanol EFC 300: handelsübliches Koaleszenzmittel (Fa. Cognis) zum Vergleich
- Texanol: handelsübliches Koaleszenzmittel (Fa. Eastman) zum Vergleich
- Scheuerflüssigkeit: Na-n-dodecylbenzylsulfonat, 0,25% in Wasser
- Tylose MH 30000YP 4: handelsüblicher Verdicker, (Fa. SE Tylose)
- Calgon N: handelsübliches Dispergiermittel (Fa. BK Guilini)
- Hydropalat 5040: handelsübliches Dispergiermittel (Fa. Cognis)
- Foamaster 50: handelsüblicher Entschäumer (Fa. Cognis)
- Mistron 754: handelsüblicher Füllstoff (Fa. Rio Tinto Minerals)
- Socal P2: handelsüblicher Füllstoff (Fa. Solvay Chemicals)
- China Clay B: handelsüblicher Füllstoff (Fa. Imerys)
- Durcal 2: handelsüblicher Füllstoff (Fa. Omya)
- Durcal 5: handelsüblicher Füllstoff (Fa. Omya)
- Kronos 2160: handelsübliches Weißpigment (Fa. Kronos)
- DSX 1514: handelsüblicher Verdicker (Fa. Cognis)

### Herstellung und Beurteilung der Beschichtungen

Der Zusatz der zu prüfenden Koaleszenzmittel zur jeweiligen Polymerdispersion erfolgte unter Rühren. Nach 24-stündiger Reifezeit wurde dann per Rakel auf Glasplatten appliziert (Naßschichtdicke 150µm). Nach erfolgter Trocknung wurden die Filme beurteilt und zwar unter Verwendung verschiedener Prüfmethoden.

Die Prüfergebnisse sind den Tabellen 1 bis 3 zu entnehmen.

### Verwendete Prüfmethoden

• Die Prüfung der **Mindestfilmbildetemperatur** (MFT) erfolgte gemäß DIN 53787. Die Versuchsergebnisse sind Tabelle 1 zu entnehmen.
Die Prüfung der **Pendelhärte** nach König erfolgte gemäß DIN 53157. Die Versuchsergebnisse sind Tabelle 1 zu entnehmen.
• Die Geruchsprüfung erfolgte folgendermaßen: 3 g Material wurden in einem 850 ml Kunststoffbecher gefüllt und dieser über Nacht mit einem Deckel verschlossen. Anschließende wurde der Geruch von einem Geruchspanel von zehn Personen nach folgendem Notensystem beurteilt:
5 = kein Geruch; 4 = wahrnehmbarer Geruch; 3 = wahrnehmbarer Geruch, eher unangenehm; 3 = wahrnehmbarer Geruch, eher unangenehm; 2 = wahrnehmbarer Geruch, unangenehm; 1 = sehr starker Geruch, sehr unangenehm. Die Versuchsergebnisse sind Tabelle 2 zu entnehmen.
• Die Wasch- und Scheuerbeständigkeit wurde nach DIN ISO 11998 durchgeführt. Als Testfarbe kam dabei folgende Rezeptur, eine Dispersionsfarbe auf Basis Styrolacrylat (Acronal 290 D), zum Einsatz (Angaben in Gewichtsteilen):

| | |
|---|---|
| Wasser | 13,0 |
| Tylose MH 30000YP 4 (2,0 % in H₂O) | 7,0 |
| Calgon N (10 % in Wasser) | 0,7 |
| Hydropalat 5040 (40%) | 0,4 |
| Foamaster 50 | 0,3 |
| Mistron 754 | 7,0 |
| Socal P2 | 13,0 |
| China Clay B | 3,0 |
| Durcal 2 | 10,0 |
| Durcal 5 | 20,0 |
| Kronos 2160 | 8,0 |
| NaOH (10% in Wasser) | 0,2 |

Diese Komponenten wurden 30 min bei 2000 Upm dispergiert, danach wurden folgende Komponenten hinzugefügt:

| | |
|---|---|
| Foamaster 50 | 0,4 |
| DSX 1514, 40% | 0,4 |
| Acronal 290 D (50%) | 10,0 |
| Water | 4,6 |
| Total | 98,0 |

Spezialfolien (Leneta) wurden per Filmziehgerät mit der obigen Rezeptur (Nullprobe = ohne Koaleszenzmittel) bzw. mit dieser Rezeptur, der das jeweils zu prüfende Koaleszenzmittel beigefügt war, beschichtet (v=11,43 mm/s), Trockenschichtdicke ca.200µm. Trocknungsprozess (3-stufige Trocknung): a) 24 Stunden bei 23°C und 50% relativer Luftfeuchte, dann b) 24 h 50°C und c) 24 h 23°C 50% relativer Luftfeuchte als Scheuertestgerät wurde eingesetzt: Erichsen, Modell 494; es wurden 200 Scheuerbewegungen durchgeführt.

Die Versuchsergebnisse sind Tabelle 3 zu entnehmen.

### Versuchsergebnisse

### MFT-Werte, Filmaussehen, Pendelhärte

Es wurde wie folgt vorgegangen: Zunächst wurde das zu untersuchende Additiv zur Bindemittel/Wassermischung zugeben und langsam 3 min bei 1500 UPM gerührt. Anschliessend wuden die Proben einen Tag bei Raumtemperatur gelagert. Schließlich wurde mit einer 100 µm Rakel aufgezogen und auf Verträglichkeit geprüft, ferner nach 7 Tagen und nach 4 Wochen die Pendelhärte bestimmt. Darüber hinaus wurde die Mindestfilmbildetemperatur (MFT) gemessen.

Die Versuchsergebnisse sind in den nachfolgenden Tabellen 1 a bis 1c zusammengestellt.

In den Kopfzeilen bedeutet 0 die Nullprobe (ohne Koaleszenzmittel), die Ziffern 1 bis 15 stellen die Versuchsnummern dar.

**Tabelle 1a**

| | **0** | **1** | **2** | **3** | **4** |
|---|---|---|---|---|---|
| Acronal 290 D | 80,0 | 80,0 | 80,0 | 80,0 | 80,0 |
| VE Wasser | 20,0 | 20,0 | 20,0 | 20,0 | 20,0 |
| Isoamyloctanoat | - | 0,8 | 1,6 | 2,4 | |
| Lusolvan FBH | - | | | | 0,8 |
| Total (Gewichtsteile) | 100,0 | 100,8 | 101,6 | 102,4 | 100,8 |
| **MFT in °C** | **15,0°** | **8,5°C** | **2,0°C** | **0°C** | **10,0°C** |
| **Filmaussehen** | leicht trüb, homogen | leicht trüb, ho-mogen | leicht trüb, homogen | leicht trüb, homogen | leicht trüb, homogen |
| **Pendelhärte nach König [sec]** | | | | | |
| nach 7 Tagen Trocknung bei 23°C /50% rel. Luftfeuchte | 49 | 14 | 18 | 24 | 25 |
| nach 28 Tagen Trocknung bei 23°C /50% rel. Luftfeuchte | 50 | 33 | 28 | 28 | 22 |

**Tabelle 1b**

| | **5** | **6** | **7** | **8** | **9** |
|---|---|---|---|---|---|
| Acronal 290 D | 80,0 | 80,0 | 80,0 | 80,0 | 80,0 |
| VE Wasser | 20,0 | 20,0 | 20,0 | 20,0 | 20,0 |
| Lusolvan FBH | 1,6 | 2,4 | | | |
| Isoamyldekanoat | | | 0,8 | 1,6 | 2,4 |
| Total (Gewichtsteile) | 101,6 | 102,4 | 100,8 | 101,6 | 102,4 |
| **MFT in °C** | **3,0°C** | **0°C** | **8,0°C** | **2°C** | **0°C** |
| **Filmaussehen** | leicht trüb, homogen | leicht trüb, homogen | leicht trüb, homogen | leicht trüb, homogen | leicht trüb, homogen |
| **Pendelhärte nach König [sec]** | | | | | |
| nach 7 Tagen Trocknung bei 23°C /50% rel. Luftfeuchte | 18 | 17 | 25 | 16 | 14 |
| nach 28 Tagen Trocknung bei 23°C /50% rel. Luftfeuchte | 26 | 29 | 29 | 24 | 23 |

**Tabelle 1c**

| | **10** | **11** | **12** | **13** | **14** | **15** |
|---|---|---|---|---|---|---|
| Acronal 290 D | 80,0 | 80,0 | 80,0 | 80,0 | 80,0 | 80,0 |
| VE Wasser | 20,0 | 20,0 | 20,0 | 20,0 | 20,0 | 20,0 |
| Loxanol EFC 300 | 0,8 | 1,6 | 2,4 | | | |
| Texanol | | | | 0,8 | 1,6 | 2,4 |
| Total (Gewichtsteile) | 100,8 | 101,6 | 102,4 | 100,0 | 100,0 | 100,0 |
| **MFT in °C** | **10,0°C** | **0°C** | **0°C** | **13°C** | **7°C** | **0°C** |
| **Filmaussehen** | leicht trüb, homogen | leicht trüb, homogen | leicht trüb, homogen | leicht trüb, homogen | leicht trüb, homogen | leicht trüb, homogen |
| **Pendelhärte nach König [sec]** | | | | | | |
| nach 7 Tagen Trocknung bei 23°C /50% rel Luftfeuchte | 18 | 15 | 11 | 25 | 14 | 10 |
| nach 28 Tagen Trocknung bei 23°C /50% rel. Luftfeuchte | 29 | 25 | 25 | 28 | 18 | 15 |

**Tabelle 2: Geruchsprüfung**

| | **TEX** | **FBH** | **IAO** | **IAD** | **LOX** |
|---|---|---|---|---|---|
| Proband 1 | 3 | 2 | 4 | 4 | 2 |
| Proband 2 | 2 | 2 | 3 | 3 | 3 |
| Proband 3 | 4 | 3 | 3 | 4 | 2 |
| Proband 4 | 3 | 2 | 4 | 4 | 2 |
| Proband 5 | 3 | 2 | 4 | 4 | 1 |
| Proband 6 | 4 | 3 | 5 | 5 | 3 |
| Proband 7 | 4 | 3 | 4 | 4 | 3 |
| Proband 8 | 4 | 3 | 5 | 5 | 4 |
| Proband 9 | 4 | 3 | 4 | 4 | 1 |
| Proband 10 | 3 | 2 | 4 | 5 | 3 |
| **Durchschnitt** | **3,4** | **2,5** | **4** | **4,2** | **2,4** |

| | | | | | |
|---|---|---|---|---|---|
| Es bedeuten in der Kopfzeile der Tabelle 2: TEX = Texanol; FBH = Lubosolvan FBH; IAO = Isoamyloctanoat, IAD = Isoamyldecanoat, LOX = Loxanol EFC 300 | | | | | |

**Tabelle 3: Wasch- und Scheuerbeständigkeit**

| **Koaleszenzmittel** | **g/m²** |
|---|---|
| ohne | 191 |
| Lusolvan FBH 1,0% | 125 |
| Lusolvan FBH 2,0% | 166 |
| Lusolvan FBH 3,0% | 116 |
| Isoamyloctanoat 1,0% | 113 |
| Isoamyloctanoat 2,0% | 96 |
| Isoamyloctanoat 3,0% | 105 |
| Isoamyldecanoat 1,0% | 126 |
| Isoamyldecanoat 2,0% | 143 |
| Isoamyldecanoat 3,0% | 177 |
| Loxanol EFC 300 1,0% | 109 |
| Loxanol EFC 300 2,0% | 81 |
| Loxanol EFC 300 3,0% | 116 |
| Texanol 1,0% | 95 |
| Texanol 2,0% | 60 |
| Texanol 3,0% | 59 |

| | |
|---|---|
| Die % Angaben der Koaleszenzmittel in der Tabelle 3 sind zu verstehen als Gew.-% Koaleszenzmittel bezogen auf die gesamte Rezepturen, die dem Test bzgl. Wasch- und Scheuerbeständigkeit unterworfen wurde. | |

## Patentansprüche

1. Verwendung von Estern, deren Säurebaustein eine Monocarbonsäure mit 8 bis 12 C-Atomen ist und deren Alkoholbaustein ausgewählt wird aus der Gruppe der Pentanole, als Koaleszenzmittel.

2. Verwendung nach Anspruch 1, wobei die Ester in Kombination mit anderen, strukturell von diesen Estem verschiedenen Koaleszenzmitteln eingesetzt werden.

3. Verwendung nach Anspruch 1 oder 2 bei der Herstellung von Beschichtungen jeglicher Art auf Basis wässriger Polymer- bzw. Latex-Dispersionen.

4. Verwendung nach Anspruch 1 oder 2 bei der Herstellung von Beschichtungen auf Basis von wässrigen Dispersionsfarben.

## Claims

1. The use of esters whose acid component is a monocarboxylic acid having 8 to 12 C atoms and whose alcohol component is selected from the group of the pentanols as coalescents.

2. The use as claimed in claim 1, wherein the esters are used in combination with other coalescents which differ structurally from these esters.

3. The use as claimed in claim 1 or 2 in the production of coatings of any kind based on aqueous polymer dispersions or latex dispersions.

4. The use as claimed in claim 1 or 2 in the production of coatings based on aqueous emulsion paints.

## Revendications

1. Utilisation d'esters dont l'élément acide est un acide monocarboxylique comprenant 8 à 12 atomes de carbone et dont l'élément alcool est choisi dans le groupe des pentanols, comme agent de coalescence.

2. Utilisation selon la revendication 1, les esters étant utilisés en combinaison avec d'autres agents de coalescence structurellement différents de ces esters.

3. Utilisation selon la revendication 1 ou 2 lors de la réalisation de revêtements de n'importe quel type à base de dispersions aqueuses de polymères ou de latex.

4. Utilisation selon la revendication 1 ou 2 lors de la réalisation de revêtements à base de colorants dispersés aqueux.
